# EUROPÄISCHE PATENTSCHRIFT

(11) **EP 1 901 468 B1**
(45) Veröffentlichungstag und Bekanntmachung des Hinweises auf die Patenterteilung: **17.10.2012**
(21) Anmeldenummer: 06019176.4
(22) Anmeldetag: 13.09.2006
(51) Int. Cl.: H04L 1/00

(54) **Verfahren zur Kodierung eines berührungslosen Schaltsystems**
Coding method for a contactless switching system
Procédé de codage pour un dispositif de commutation du type sans contact

(43) Veröffentlichungstag der Anmeldung: 19.03.2008
(73) Patentinhaber: SIEMENS AKTIENGESELLSCHAFT, 80333 München (DE)
(72) Erfinder: Hammer, Christian, 92263 Ebermannsdorf (DE); Metz, Gerhard, 81379 München (DE); Seisenberger, Claus, 84181 Neufrannhofen (DE)

(56) Entgegenhaltungen:
- EP-A1- 0 982 688
- EP-A2- 0 808 971
- EP-B1- 0 570 103
- US-A- 5 191 610

## Beschreibung

Die Erfindung betrifft ein Verfahren zur Codierung eines berührungslosen Schaltsystems mit wenigstens einem Sensor und wenigstens einem Signalgeber, wobei der Signalgeber mindestens eine Datensequenz sendet und der Sensor die Datensequenz empfängt. Des Weiteren betrifft die Erfindung ein berührungsloses Schaltsystem und einen Sensor für ein derartiges berührungsloses Schaltsystem.

Ein berührungsloses Schaltsystem wird beispielsweise in der Form eines berührungslos wirkenden Positions- oder Sicherheitsschalters implementiert und zur Überwachung von sicherheitsrelevanten Bereichen oder allgemein zur Kontrolle der gegenseitigen Position zweier Teile, wobei mindestens eines der beiden Teile unabhängig von dem anderen bewegt werden kann, eingesetzt. Typische Anwendungsszenarien sind beispielsweise Schutztüren oder Schutzklappen, die eine Schutzschaltungsauslösung in einer sicherheitsrelevanten Position vorsehen.

Ein berührungsloser Positions- oder Sicherheitsschalter besteht mindestens aus zwei voneinander unabhängig beweglichen Teilen, die in der Regel Sensor und Signalgeber genannt werden. Die Kommunikation zwischen Sensor und Signalgeber findet zum Beispiel mittels magnetischen oder auch elektromagnetischen Wechselfeldern statt.

Beispielsweise auf eine Anforderung des Sensors hin sendet der Signalgeber eine Antwort, die eine Identifikationsnummer oder Seriennummer und üblicherweise eine Prüfsumme enthält. Als mögliche Berechnungsvorschrift für die Prüfsumme kommt unter anderem das Verfahren "Cyclic Redundancy Check" (CRC) in Frage. Sie gestattet Übertragungsfehler mit einer hohen Wahrscheinlichkeit sicher zu erkennen. Der Positions- oder Sicherheitsschalter gibt den sicherheitsrelevanten Bereich nur dann frei, wenn sich der Signalgeber relativ zum Sensor innerhalb eines definierten Wirkbereiches befindet. Eine Freigabe findet nicht statt, falls wegen eines Übertragungsfehlers, die empfangene Prüfsumme nicht der berechneten Prüfsumme entspricht.

Zum gegenwärtigen Zeitpunkt sind Positions- oder Sicherheitsschalter mit unterschiedlichen Arten von Codierungen betreibbar. Man unterscheidet Gruppencodierung, Familiencodierung, Individualcodierung und Mastercodierung.

Bei der Familien- bzw. Gruppencodierung passt nur eine Familie bzw. eine Gruppe von Sensoren und Signalgebern zueinander. Zur Realisierung wird in der Regel ein Teil der Seriennummer zur Identifikation verwendet, die bei einem in den Wirkbereich eintretenden Signalgeber auf eine jeweilige Familie schließen lässt. Eine andere mögliche Realisierung ist eine Seriennummernliste, die dem Sensor vorliegt. Nur die Signalgeber, die eine entsprechende Seriennummer aufweisen, lösen bei dem Sensor eine Sicherheitsschaltung aus. Die Realisierung der Familiencodierung ist meist herstellerabhängig und verhindert einen flexiblen Einsatz der Signalgeber bzw. Sensoren mit Produkten anderer Hersteller. In der Regel ist eine Interaktion mit Produkten anderer Hersteller aus Sicherheitsgründen nicht gewollt und wird daher mit Absicht vermieden.

Bei der Individualcodierung passen ein Signalgeber und ein Sensor nur als Paar zueinander. Fremde Sensoren bzw. Signalgeber spielen hierbei keine Rolle. Der Sensor erkennt nur eine Seriennummer und ignoriert jeden Signalgeber mit einer anderen Seriennummer.

Bei der Mastercodierung schaltet ein mastercodierter Signalgeber beide Arten von Sensoren desselben Herstellers, individual- und familiencodiert frei. Mastercodierte Signalgeber sind zum Gebrauch durch das Wartungspersonal bei Inbetriebnahme bzw. Wartungsarbeiten vorgesehen. Der mastercodierte Signalgeber übernimmt die Funktion eines Generalschlüssels.

Zum derzeitigen Stand der Technik erkennt der Sensor des Positions- oder Sicherheitsschalters anhand der Signalgeberseriennummer die jeweilige Codierungsart und verfährt entsprechend. Die Erkennung kann hierbei durch bestimmte getrennte oder ausgewiesene Bereiche der Signalgeberseriennummer ausschlaggebend sein. Da allerdings die Seriennummer des Signalgebers nicht änderbar ist, ist auch die Codierungsart von vorn herein festgelegt. Dies bedeutet, dass nur bei ganz bestimmten Seriennummern eine Operation mit einem bestimmten Sensor möglich ist, nämlich dann, wenn die Seriennummer des Signalgebers im erlaubten Seriennummernbereich des Sensors liegt. Unter Umständen funktionieren Signalgeber von anderen Herstellern an Sensoren, für die sie nicht gedacht sind, sofern sie zufällig in einen der bestimmten Seriennummernbereiche fallen.

Die EP 0 570 103 B1 beschreibt ein Verfahren zur Codierung eines berührungslosen Schaltsystems mit wenigstens einem Sensor und wenigstens einem Signalgeber, wobei der Signalgeber mindestens eine Datensequenz sendet und der Sensor die Datensequenz empfängt, wobei die in der Datensequenz enthaltene Prüfsumme zur Prüfung einer Qualität der Datenübertragung und zur Implementierung einer Codierung verwendet wird.

Der Erfindung liegt die Aufgabe zugrunde, eine vielseitige Implementierung einer benutzerdefinierbaren Codierungsart eines berührungslosen Schaltsystems für einen Kosten sparenden Einsatz desselben anzugeben.

Diese Aufgabe wird durch ein Verfahren der eingangs genannten Art dadurch gelöst, dass die in der Datensequenz enthaltene Prüfsumme zur Prüfung einer Qualität der Datenübertragung und zur Implementierung einer Codierung verwendet wird. Des Weiteren wird die Aufgabe durch einen Sensor und ein berührungsloses Schaltsystem mit den im Anspruch 9 bzw. Anspruch 15 angegebenen Merkmalen gelöst.

Die Funktionsweise des Verfahrens zur Codierung eines berührungslosen Schaltsystems beruht auf einer Doppelfunktion der Prüfsumme. Eine Datensequenz, die beispielsweise auf Anfrage durch den Sensor vom Signalgeber oder aufgrund der Anwesenheit eines magnetischen oder elektromagnetischen Wechselfeldes gesendet wird, enthält unter anderem eine Seriennummer und eine Prüfsumme. Die Prüfsumme wird zur Prüfung einer Qualität der Datenübertragung verwendet. Die Implementierung einer Codierung, wie beispielsweise einer Individualcodierung, einer Familiencodierung und/oder einer Mastercodierung, wird durch eine entsprechende Prüfsummenberechnungsvorschrift erreicht. Die Prüfsummenberechnungsvorschrift ist hierbei charakteristisch für die jeweilige Codierung. Die Länge und die Prüfsummenberechnungsvorschrift der Prüfsumme kann je nach gewünschter Wahrscheinlichkeit für eine fehlerfreie Datenübertragung und für eine sichere Erkennung der Codierungsvariante gewählt werden. Auf der Signalgeberseite wird zwischen Familien- und Individualcodierung nicht unterschieden. Es wird auf der Signalgeberseite beispielsweise eine herstellerspezifische oder gruppenspezifische Prüfsummenberechnungsvorschrift verwendet, wobei erst der Sensor nach dem Erhalt der Datensequenz prüft, ob die verwendete Prüfsummenberechnungsvorschrift der abgefragten Codierung entspricht. Die Zuordnung, ob eine Prüfsummenberechnungsvorschrift beispielsweise eine Individualcodierung oder eine Familiencodierung anzeigt ist innerhalb des Schaltsystems festgelegt.

Bei einer vorteilhaften Ausführungsform ist der Sensor familiencodiert. Ein solcher Sensor löst einen Schaltvorgang, wie beispielsweise einen Ein/Aus-Schutzschaltvorgang aus, wenn ein Signalgeber eines Herstellers oder ein Signalgeber, der einer bestimmten Gerätegruppe angehört, in dem Wirkbereich des Sensors eintritt.

Bei einer vorteilhaften Ausführungsform ist der Sensor individualcodiert. In diesem Fall ist es notwendig, dem Sensor die Seriennummern der relevanten Signalgeber entsprechend einzuprogrammieren, so dass genau diese Seriennummern nach dem Erkennen der Individualcodierung vom Sensor erkannt werden können.

Bei einer vorteilhaften Ausführungsform ist der Sensor zur Erkennung von individualcodierten und familiencodierten Prüfsummen vorgesehen. Aus der empfangenen Seriennummer wird im Sensor mit der passenden Prüfsummenberechnungsvorschrift die jeweilige Prüfsumme gebildet und mit der empfangenen Prüfsumme verglichen. Sind beide Prüfsummen identisch, so ist mit einer Wahrscheinlichkeit, die von der verwendeten Prüfsummenberechnungsvorschrift und der Prüfsummenlänge abhängt, die Datenübertragung vom Signalgeber zum Sensor fehlerfrei erfolgt und gleichzeitig die Familien- bzw. Individualcodierung erkannt worden.

Bei einer vorteilhaften Ausführungsform kann jede Seriennummer für jede Codierungsvariante verwendet werden. Es sind dann keine Seriennummernkontingente für den Schalterhersteller oder für die Gerätegruppen zu berücksichtigen. Es ist sogar möglich, Signalgeber mit gleichen Seriennummern unterschiedlichen Gruppen zuzuordnen, weil anhand der jeweiligen Prüfsummen, die mittels unterschiedlicher Prüfsummenberechnungsvorschriften berechnet wurden, eine Unterscheidung der beiden Signalgeber möglich ist.

Vorteilhafterweise kann die Prüfsumme auch dann sowohl zur Einstellung der Codierungsvariante als auch gleichzeitig ohne zusätzlichen Aufwand zur Prüfung der fehlerfreien Datenübertragung verwendet werden, wenn ein Signalgeber bereits herstellerseitig eine feste Seriennummer trägt. Da die Identifikation nunmehr zumindest teilweise durch die Prüfsumme erfolgt, können Signalgeber mit voreingestellter Seriennummer flexibel verwendet werden. Die Prüfsumme wird dann beispielsweise in den frei programmierbaren Bereich des Signalgebers eingetragen.

Vorteilhafterweise können alle oder mehrere familiencodierte Sensoren des Schaltsystems die gleiche Programmierung aufweisen. Dies wird durch die Tatsache ermöglicht, dass keine Seriennummer eines Signalgebers oder ein Seriennummernbereich hinterlegt werden muss.
Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

Es zeigen:
- FIG 1: eine schematische Darstellung eines Wirkbereichs eines berührungslosen Schaltsystems eines ersten Ausführungsbeispiels,
- FIG 2: eine schematische Darstellung einer Datensequenz eines Signalgebers des ersten Ausführungsbeispiels,
- FIG 3: eine beispielhafte Generierung einer Datensequenz mittels einer Prüfsummenberechnungsvorschrift des ersten Ausführungsbeispiels,
- FIG 4: ein Ablaufdiagramm einer Sensorprogrammierung eines zweiten Ausführungsbeispiels und
- FIG 5: ein Ablaufdiagramm einer Sensorprogrammierung mit Mastererkennung eines dritten Ausführungsbeispiels.

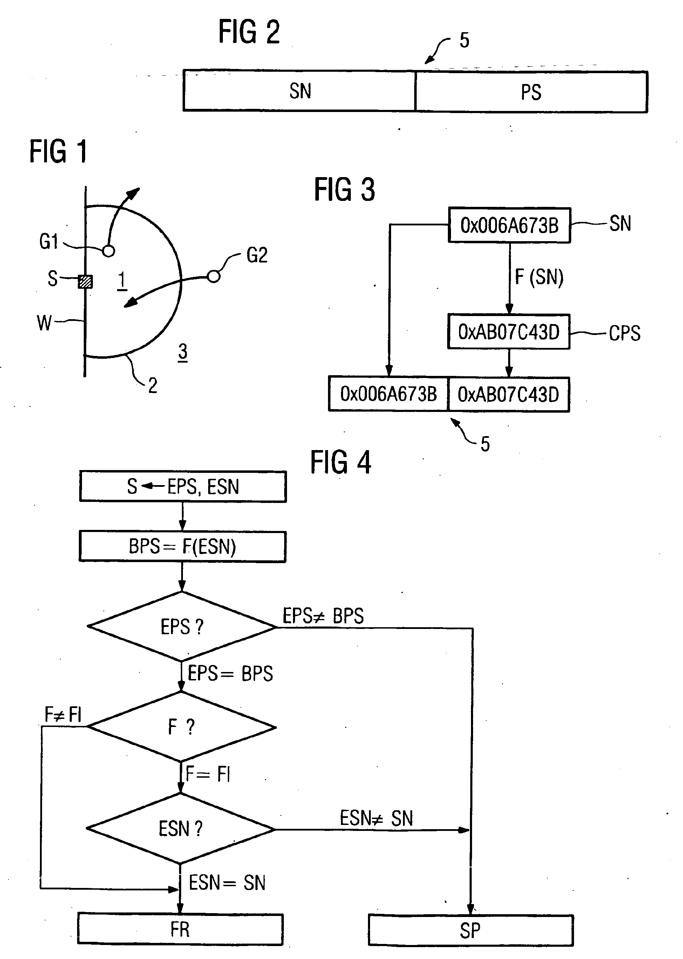

FIG 1 zeigt eine schematische Darstellung eines Wirkbereichs eines berührungslosen Schaltsystems eines ersten Ausführungsbeispiels. Das gezeigte berührungslose Schaltsystem weist einen Sensor S auf einer Begrenzungsfläche W auf. Der Wirkbereich des Sensors S erstreckt sich auf die rechte Seite und weist vereinfachend eine halbkreisähnliche Form auf. Der Einschaltbereich 1 ist ebenfalls halbkreisförmig und endet an der Grenze 2. Bis zur Grenze 2 ist ein sicheres Erkennen eines Signalgebers G1, G2 möglich. Ist die Grenze 2 überschritten, so befindet sich der Signalgeber G1, G2 im Ausschaltbereich 3. Die Grenze 2 ist hierbei vereinfachend als Linie dargestellt, wohingegen in der Praxis ein so genannter Hysteresebereich den Einschaltbereich 1 vom Ausschaltbereich 3 trennt.

Das dargestellte, berührungslose Schaltsystem weist zwei bewegliche Signalgeber G1, G2 auf, die sich abwechselnd im Wirkbereich befinden können. Eine Familiencodierung ist vorteilhaft, da eine Schaltfunktion auf das Ein- oder Austreten des ersten Signalgebers G1 oder des zweiten Signalgebers G2 auslösbar sein soll. Hierzu ist eine Prüfsummenberechnungsvorschrift zu wählen, die dem Sensor S anzeigt, dass es sich um die dem Schaltsystem zugehörigen Signalgebern G1, G2 handelt. Der familiencodierte Sensor S ist dann auch nicht mehr in der Lage zu unterscheiden, ob der erste Signalgeber G1 oder der zweite Signalgeber G2 eine Schaltfunktion durch den Eintritt in den Einschaltbereich 1 ausgelöst hat, weil ein Überprüfen der Seriennummer selbst nicht notwendig ist. Bei einem individualcodierten Sensor S würde sich die Überprüfung der Seriennummer anschließen.

FIG 2 zeigt eine schematische Darstellung einer Datensequenz 5 der Signalgeber G1, G2 des ersten Ausführungsbeispiels. Die Datensequenz 5 stellt eine sehr einfache Form einer Datensequenz dar, die aus der Seriennummer SN und der Prüfsumme PS einen zusammenhängenden Datenblock bildet und diesen gegebenenfalls mit anderen Daten sendet. Die Prüfsumme PS dient sowohl zur Verifizierung der fehlerhaften Datenübertragung vom Signalgeber G1, G2 zum Sensor S, als auch zur Einstellung der gewünschten Codierungsvariante.

Die zur Generierung der Prüfsumme PS verwendete Prüfsummenberechnungsvorschrift indiziert innerhalb des berührungslosen Schaltsystems eine Familiencodierung. Für den jeweiligen Signalgeber G1, G2 allerdings unterscheidet sie sich im Vergleich zu einer Individualcodierung nicht.

FIG 3 zeigt eine beispielhafte Generierung einer Datensequenz 5 mittels einer Prüfsummenberechnungsvorschrift F des ersten Ausführungsbeispiels. Aus der Seriennummer SN, die hier beispielhaft als hexadezimale Zahl (32 Bit) angegeben wird, generiert die Prüfsummenberechnungsvorschrift F eine codierte Prüfsumme CPS. Die Datensequenz 5 setzt sich, wie bereits in FIG 2 gezeigt, aus der Seriennummer SN und der Prüfsumme PS, in diesem Fall der codierten Prüfsumme CPS, zusammen.

Um eine möglichst sichere Erkennung von Übertragungsfehlern zu gewährleisten, wird zum Beispiel als Prüfsummenberechnungsvorschrift ein angemessener CRC-Algorithmus verwendet. Der CRC-Algorithmus gestattet als Unterscheidungsmerkmal zu den anderen Herstellern (Familiencodierung) neben der Wahl des Generatorpolynoms die freie Wahl des Startpolynoms (CRC-Startwert). Die Sicherheit der Codierungserkennung und Datenübertragung steigt mit der Länge der Prüfsumme (Bit-Anzahl), die in diesem Ausführungsbeispiel eine Länge von 32 Bits aufweist.

FIG 4 zeigt ein Ablaufdiagramm einer Sensorprogrammierung eines zweiten Ausführungsbeispiels. Der Sensor ist dahingehend programmiert, die entsprechende Codierungsart zu identifizieren. Hierzu speichert der Sensor die empfangene Prüfsumme EPS und die empfangene Seriennummer ESN ab (siehe erstes Kästchen des Ablaufdiagramms). Im nächsten Schritt bildet eine Auswerteeinheit des Sensors eine berechnete Prüfsumme, die anhand der empfangenen Seriennummer ESN und der Prüfsummenberechnungsvorschrift F für Familiencodierung oder Individualcodierung gebildet wird. Anschließend wird in einer Abfrage die empfangene Prüfsumme EPS mit der berechneten Prüfsumme BPS verglichen. Sind die beiden Prüfsummen nicht identisch, so erfolgt eine Sperrung SP. Ist die empfangene Prüfsumme identisch mit der berechneten Prüfsumme, so ist die Codierungsart (Individual- oder Familiencodierung) erkannt worden. Ist der Sensor als reiner familiencodierter Sensor ausgelegt, so ist an dieser Stelle die Prüfung beendet und der Sicherheitsbereich wird durch die Freischaltung FR frei geschaltet.

Ist der Sensor als individualcodierter Sensor ausgelegt, muss nach der positiven Prüfsummenprüfung weiter geprüft werden, ob ein passender Signalgeber vorliegt. Es wird weiter abgefragt, ob dem Sensor die empfangene Seriennummer ESN einer bekannten Seriennummer SN, die vorher dem Sensor eingelernt worden ist, entspricht. Ist dem Sensor die empfangene Seriennummer ESN bekannt, so wird er wieder eine Freigabe FR auslösen. Eine Nichtidentifizierung der empfangenen Seriennummer ESN führt hingegen zu einer Beibehaltung der Sperrung SP.

Ist der Vergleich der Prüfsummen EPS, BPS nicht erfolgreich, wurde entweder die Kombination "empfangene Seriennummer ESN" und "empfangene Prüfsumme EPS" nicht fehlerfrei empfangen oder die Prüfsumme weist nicht die entsprechende Familien/Individualcodierung auf. Konnte bei der Individualcodierung die empfangene Seriennummer ESN keiner bekannten Seriennummer SN zugeordnet werden, ist eine Freigabe FR nicht mehr möglich. In beiden Fällen bleibt das berührungslose Schaltsystem, welches als Positions- oder Sicherheitsschalter ausgeführt sein kann, gesperrt.

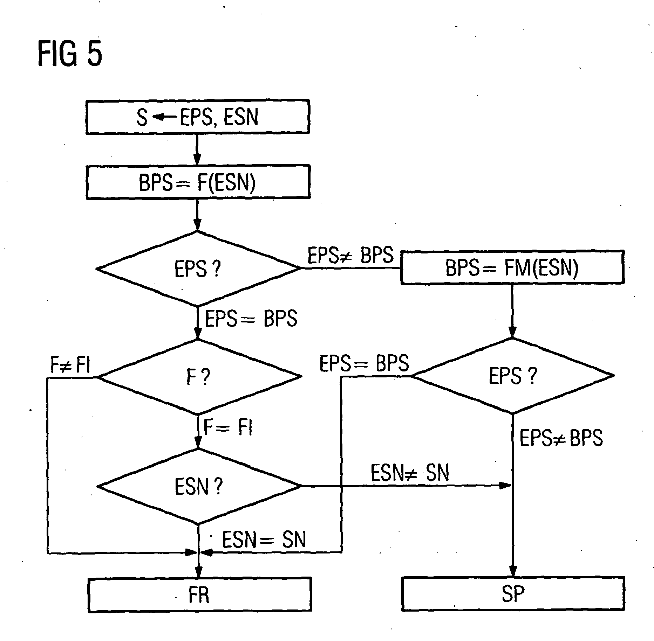

FIG 5 zeigt ein Ablaufdiagramm einer Sensorprogrammierung mit Mastererkennung eines dritten Ausführungsbeispiels. Im gezeigten Ablaufdiagramm wird zu dem bereits aus FIG 4 bekannten Ablaufdiagramm eine zusätzliche Masterkennung realisiert. Bei fehlerhafter Familien-/Individual-Prüfsumme wird anschließend als berechnete Prüfsumme BPS eine Masterprüfsumme mittels der Masterprüfsummenberechnungsvorschrift FM gebildet. Die neue berechnete Prüfsumme BPS wird mit der empfangenen Prüfsumme EPS verglichen. Sind die beiden Prüfsummen nicht identisch, so ist kein Mastersignalgeber erkannt worden und das berührungslose Schaltsystem verbleibt im Sperrzustand (Sperrung SP). Sind hingegen die empfangene Prüfsumme EPS und die mit der Prüfsummenberechnungsvorschrift FM berechnete Prüfsumme BPS identisch, so führt dies direkt zu einer Freigabe FR des Schutzbereiches.

Damit keine erneute komplette Prüfsummenberechnung erforderlich wird, kann die Masterprüfsummenberechnungsvorschrift FM aus der Familien-/Individualprüfsummenberechnungsvorschrift F durch einfache Erweiterung des Algorithmus erzielt werden. Hier bieten sich beispielsweise eine Invertierung oder Addition einer Konstanten an. Vorteilhafterweise bleibt die Sicherheit der Prüfsumme dabei unverändert.

Mit einer Sensorprogrammierung gemäß dem gezeigten Ablaufdiagramm ist sichergestellt, dass sowohl familien-, als auch individualcodierte Sensoren den Mastersignalgeber an dessen Masterprüfsumme erkennen.

Zusammenfassend betrifft die Erfindung ein berührungsloses Schaltsystem und ein Verfahren zur Codierung desselben mit wenigstens einem Sensor und wenigstens einem Signalgeber, wobei der Signalgeber mindestens eine Datensequenz sendet und der Sensor die Datensequenz empfängt. Es wird eine technische Lehre zur kostengünstigen und vielseitigen Codierung eines berührungslosen Schaltsystems angegeben. Hierzu wird vorgeschlagen, eine vom Benutzer implementierbare Codierung in der Prüfsumme der Datensequenz bzw. der Prüfsummenberechnungsvorschrift zu verankern, so dass die in der Datensequenz enthaltene Prüfsumme zur Prüfung einer Qualität der Datenübertragung und gleichzeitig zur Implementierung der Codierung verwendet wird.

## Patentansprüche

1. Verfahren zur Codierung eines berührungslosen Schaltsystems mit wenigstens einem Sensor (S) und wenigstens einem Signalgeber (G1, G2), wobei der Signalgeber (G1, G2) mindestens eine Datensequenz (5) sendet und der Sensor (S) die Datensequenz (5) empfängt, wobei die in der Datensequenz (5) enthaltene Prüfsumme (PS, EPS, CPS) zur Prüfung einer Qualität der Datenübertragung und zur Implementierung einer Codierung verwendet wird, **dadurch gekennzeichnet, dass** eine vielseitige Implementierung einer benutzerdefinierbaren Codierungsart des berührungslosen Schaltsystems eingesetzt wird.

2. Verfahren nach Anspruch 1, wobei die in der Datensequenz (5) enthaltene Prüfsumme (PS, EPS, CPS) zur Erkennung der Codierung verwendet wird.

3. Verfahren nach einem der Ansprüche 1 oder 2, wobei die Codierung eine Individualcodierung, eine Familiencodierung und/oder eine Mastercodierung ist.

4. Verfahren nach einem der vorhergehenden Ansprüche, wobei die Prüfsumme (PS, EPS, BPS, CPS) aus der Seriennummer (SN, ESN) mittels einer Prüfsummenberechnungsvorschrift (F, FI, FM) berechnet wird.

5. Verfahren nach einem der vorhergehenden Ansprüche, wobei der Sensor (S) anhand der Prüfsumme (PS, EPS, BPS, CPS) die Codierung des Signalgebers (G1, G2) erkennt.

6. Verfahren nach einem der vorhergehenden Ansprüche, wobei die Prüfsumme (PS, CPS) im frei programmierbaren Speicher des Signalgebers (G1, G2) abgelegt wird.

7. Verfahren nach einem der vorhergehenden Ansprüche, wobei
- in einem ersten Schritt die Seriennummer (SN, ESN) und die Prüfsumme (PS, EPS, CPS) vom Sensor (S) gelesen werden,
- in einem zweiten Schritt mindestens eine berechnete Prüfsumme (BPS) mittels mindestens einer Prüfsummenberechnungsvorschrift (F, FI, FM) aus der empfangenen Seriennummer (ESN) gebildet wird, und
- in einem dritten Schritt die berechnete Prüfsumme (BPS) mit der empfangenen Prüfsumme (EPS) verglichen wird.

8. Verfahren nach Anspruch 7, wobei
- in einem vierten Schritt eine Individual-, Familien-, und/oder Mastercodierung anhand des Prüfsummenvergleichs überprüft wird und bei Feststellung der Individual-, Familien-, oder Mastercodierung eine Schaltung, insbesondere eine Freigabenschaltung, ausgelöst wird.

9. Sensor (S) für ein berührungsloses Schaltsystem, wobei das berührungslose Schaltsystem wenigstens einen Signalgeber (G1, G2) aufweist, wobei der Sensor (S) zum Empfangen mindestens einer vom Signalgeber (G1, G2) gesendeten Datensequenz (5) vorgesehen ist, **dadurch gekennzeichnet** , d a s s der Sensor (S) eine Auswerteeinheit zur Prüfung einer Qualität der Datenübertragung und zur Erkennung einer benutzerdefinierbaren Codierung anhand der in der Datensequenz (5) enthaltenen Prüfsumme (PS, EPS, CPS) aufweist.

10. Sensor (S) nach Anspruch 9, wobei die Auswerteeinheit zur Berechnung einer Prüfsumme (PS, EPS, BPS, CPS) aus der empfangenen Seriennummer (ESN) mittels einer Prüfsummenberechnungsvorschrift (F, FI, FM) vorgesehen ist.

11. Sensor (S) nach einem der Ansprüche 9 oder 10, wobei der Sensor (S) für eine Individualcodierung, eine Familiencodierung und/oder eine Mastercodierung vorgesehen ist.

12. Sensor (S) nach einem der Ansprüche 9 bis 11, wobei die Auswerteeinheit zum Vergleich einer empfangenen Prüfsumme (EPS) mit mindestens einer, mittels einer Prüfsummenberechnungsvorschrift berechneten Prüfsumme (BPS) vorgesehen ist.

13. Sensor (S) nach einem der Ansprüche 9 bis 12, wobei die Auswerteeinheit zur Erkennung der Codierung anhand der Prüfsumme (PS, EPS, BPS, CPS) vorgesehen ist.

14. Sensor (S) nach einem der Ansprüche 9 bis 13, wobei die Auswerteeinheit zum Erhalt der empfangenen Prüfsumme (EPS) aus dem frei programmierbaren Anteil der Datensequenz (5) des Signalgebers (G1, G2) vorgesehen ist.

15. Berührungsloses Schaltsystem, insbesondere ein berührungsloser Positions- oder Sicherheitsschalter, mit wenigstens einem Signalgeber (G1, G2) und wenigstens einem Sensor (S) nach einem der Ansprüche 9 bis 14.

## Claims

1. Method for encoding a contactless switching system having at least one sensor (S) and at least one signal generator (G1, G2), wherein the signal generator (G1, G2) sends at least one data sequence (5) and the sensor (S) receives the data sequence (5), wherein the checksum (PS, EPS, CPS) contained in the data sequence (5) is used for checking the quality of the data transmission and for implementing an encoding variant, **characterised in that** a versatile implementation of a user-definable encoding type for the contactless switching system is deployed.

2. Method according to claim 1, wherein the checksum (PS, EPS, CPS) contained in the data sequence (5) is used for detecting the encoding.

3. Method according to one of claims 1 or 2, wherein the encoding is an individual encoding, a family encoding and/or a master encoding.

4. Method according to one of the preceding claims, wherein the checksum (PS, EPS, BPS, CPS) is calculated from the serial number (SN, ESN) using a checksum calculation rule (F, FI, FM).

5. Method according to one of the preceding claims, wherein the sensor (S) detects the encoding of the signal generator (G1, G2) on the basis of the checksum (PS, EPS, BPS, CPS).

6. Method according to one of the preceding claims, wherein the checksum (PS, CPS) is stored in the freely programmable memory of the signal generator (G1, G2).

7. Method according to one of the preceding claims, wherein
- at a first step the serial number (SN, ESN) and the checksum (PS, EPS, CPS) are read by the sensor (S),
- at a second step at least one calculated checksum (BPS) is formed from the received serial number (ESN) using at least one checksum calculation rule (F, FI, FM), and
- at a third step the calculated checksum (BPS) is compared with the received checksum (EPS).

8. Method according to claim 7, wherein
- at a fourth step an individual, family and/or master encoding is checked with the aid of the checksum comparison and if the individual, family or master encoding is identified, a circuit, in particular a release circuit, is tripped.

9. Sensor (S) for a contactless switching system, wherein the contactless switching system has at least one signal generator (G1, G2), wherein the sensor (S) is provided for receiving at least one data sequence (5) sent by the signal generator (G1, G2), **characterised in that** the sensor (S) has an evaluation unit for checking the quality of the data transmission and for detecting a user-definable encoding on the basis of the checksum (PS, EPS, CPS) contained in the data sequence (5).

10. Sensor (S) according to claim 9, wherein the evaluation unit is provided for calculating a checksum (PS, EPS, BPS, CPS) from the received serial number (ESN) using a checksum calculation rule (F, FI, FM).

11. Sensor (S) according to one of claims 9 or 10, wherein the sensor (S) is provided for individual encoding, family encoding and/or master encoding.

12. Sensor (S) according to one of claims 9 to 11, wherein the evaluation unit is provided for comparing a received checksum (EPS) with at least one checksum (BPS) calculated using a checksum calculation rule.

13. Sensor (S) according to one of claims 9 to 12, wherein the evaluation unit is provided for detecting the encoding on the basis of the checksum (PS, EPS, BPS, CPS).

14. Sensor (S) according to one of claims 9 to 13, wherein the evaluation unit is provided for obtaining the received checksum (EPS) from the freely programmable portion of the data sequence (5) of the signal generator (G1, G2).

15. Contactless switching system, in particular a contactless position or safety switch, having at least one signal generator (G1, G2) and at least one sensor (S) according to one of claims 9 to 14.

## Revendications

1. Procédé de codage d'un système de commutation sans contact comportant au moins un capteur (S) et au moins un générateur de signal (G1, G2), le générateur de signal (G1, G2) émettant au moins une séquence de données (5) et le capteur (S) recevant la séquence de données (5), la somme de contrôle (PS, EPS, CPS) contenue dans la séquence de données (5) étant utilisée pour contrôler une qualité de la transmission de données et pour implémenter un codage, **caractérisé en ce qu'**est mise en oeuvre une implémentation complexe d'un type de codage du système de commutation sans contact qui peut être défini par l'utilisateur.

2. Procédé selon la revendication 1, la somme de contrôle (PS, EPS, CPS) contenue dans la séquence de données (5) étant utilisée pour reconnaître le codage.

3. Procédé selon l'une des revendications 1 ou 2, le codage étant un codage individuel, un codage familial et/ou un codage maître.

4. Procédé selon l'une des revendications précédentes, la somme de contrôle (PS, EPS, BPS, CPS) étant calculée à partir du numéro de série (SN, ESN) au moyen d'une règle de calcul de somme de contrôle (F, FI, FM).

5. Procédé selon l'une des revendications précédentes, le capteur (S) reconnaissant le codage du générateur de signal (G1, G2) à l'aide de la somme de contrôle (PS, EPS, BPS, CPS).

6. Procédé selon l'une des revendications précédentes, la somme de contrôle (PS, CPS) étant déposée dans la mémoire librement programmable du générateur de signal (G1, G2).

7. Procédé selon l'une des revendications précédentes,
- le numéro de série (SN, ESN) et la somme de contrôle (PS, EPS, CPS) étant, dans une première étape, lus par le capteur (S) ;
- au moins une somme de contrôle calculée (BPS) étant formée, dans une deuxième étape, au moyen d'au moins une règle de calcul de somme de contrôle (F, FI, FM) à partir du numéro de série reçu (ESN) et
- la somme de contrôle calculée (BPS) étant, dans une troisième étape, comparée à la somme de contrôle reçue (EPS).

8. Procédé selon la revendication 7, un codage individuel, un codage familial et/ou un codage maître étant vérifiés, dans une quatrième étape, à l'aide de la comparaison des sommes de contrôle et une commutation, et plus particulièrement une commutation de validation, étant déclenchée à la constatation du codage individuel, familial ou maître.

9. Capteur (S) pour un système de commutation sans contact, le système de commutation sans contact comportant au moins un générateur de signal (G1, G2), le capteur (S) étant prévu pour recevoir au moins une séquence de données (5) émise par le générateur de signal (G1, G2), **caractérisé en ce que** le capteur (S) comporte une unité d'évaluation pour contrôler une qualité de la transmission de données et pour reconnaître un codage, qui peut être défini par l'utilisateur, à l'aide de la somme de contrôle (PS, EPS, CPS) contenue dans la séquence de données (5).

10. Capteur (S) selon la revendication 9, l'unité d'évaluation étant prévue pour calculer une somme de contrôle (PS, EPS, BPS, CPS) à partir du numéro de série reçu (ESN) au moyen d'une règle de calcul de somme de contrôle (F, FI, FM).

11. Capteur (S) selon l'une des revendications 9 ou 10, le capteur (S) étant prévu pour un codage individuel, un codage familial et/ou un codage maître.

12. Capteur (S) selon l'une des revendications 9 à 11, l'unité d'évaluation étant prévue pour comparer une somme de contrôle reçue (EPS) à au moins une somme de contrôle (BPS) calculée au moyen d'une règle de calcul de somme de contrôle.

13. Capteur (S) selon l'une des revendications 9 à 12, l'unité d'évaluation étant prévue pour reconnaître le codage à l'aide de la somme de contrôle (PS, EPS, BPS, CPS).

14. Capteur (S) selon l'une des revendications 9 à 13, l'unité d'évaluation étant prévue pour obtenir la somme de contrôle reçue (EPS) à partir de la part librement programmable de la séquence de données (5) du générateur de signal (G1, G2).

15. Système de commutation sans contact, en particulier commutateur de position ou de sécurité sans contact, comportant au moins un générateur de signal (G1, G2) et au moins un capteur (S) selon l'une des revendications 9 à 14.
